# EUROPEAN PATENT SPECIFICATION

(11) **EP 1 236 606 B1**
(45) Date of publication and mention of the grant of the patent: **05.01.2005**
(21) Application number: 02004264.4
(22) Date of filing: 27.02.2002
(51) Int. Cl.: B60K 25/06, B60K 17/28, F16H 1/06, F16H 1/28, F16H 37/00, F16H 37/04, A01B 71/06

(54) **Reduction unit particularly for actuating the screw feeders of mixing trucks and auxiliary elements**
Untersetzungsgetriebe, insbesondere zur Betätigung des Schneckenförderers eines Mischlastwagens und Hilfseinrichtungen
Unité d'engrenage réducteur particulièrement pour le transporteur à vis d'un chariot mélangeur et éléments auxiliaires

(30) Priority: 02.03.2001 IT MI010436
(43) Date of publication of application: 04.09.2002
(73) Proprietor: Comer Industries S.p.A., 42046 Villanova di Reggiolo (Reggio Emilia) (IT)
(72) Inventor: Massaccesi, Gianni, 35010 Vigodarzere (Prov. of Padova) (IT); Gallo, Andrea, 42100 Reggio Emilia (IT)
(74) Representative: Modiano, Guido, Dr.-Ing.

(56) References cited:
- EP-A- 0 291 793
- EP-A- 0 357 580
- DE-B- 1 068 049
- DE-B- 1 081 265
- RU-C- 2 176 229
- US-A- 3 658 303
- US-A- 3 749 372
- US-A- 4 546 661

## Description

The present invention relates to a reduction unit particularly for actuating screw feeders of mixing trucks and auxiliary elements.

It is known that in mixing trucks used in the agricultural field screw feeders are usually provided, generally two contrarotating feeders, which draw their rotary motion from the power take-off of an agricultural tractor, by way of a cardan shaft or the like.

The screw feeders arranged inside the mixing truck shred and mix, by means of cutting edges distributed on the screw feeders, the forage intended to feed livestock.

Generally, in order to load the truck a desiling cutter is provided, which is designed to remove the product from the silos, facilitating its fall into the mixing truck.

In currently manufactured mixing trucks, the desiling operation is particularly dangerous, because it occurs while the screw feeders are moving since there is a nondetachable functional connection and therefore the actuation of the desiling cutter automatically entails the actuation of the screw feeders.

DE 1 068 049 and DE 1 081 265 both showing the features of the preamble of claim 1 disclose reduction units comprising a parallel shaft gear unit, with output shafts selectively coupled to an input shaft by clutches inside the parallel shaft gear unit. EP-A-0 357 580 discloses a coupling for a power take-off shaft of a tractor comprising a hydraulic clutch and a reduction gear.

The aim of the present invention is to eliminate the drawbacks noted above, by providing a reduction unit particularly for actuating the screw feeders of mixing trucks and auxiliary elements that allows to uncouple the actuation of the screw feeders from the actuation of the auxiliary elements.

Within this aim, an object of the invention is to provide a reduction unit that while having substantially improved characteristics maintains in its general features the classical structure of a reduction unit for mixing trucks.

Another object of the present invention is to provide a reduction unit particularly for actuating screw feeders of mixing trucks and auxiliary elements that, for its particular constructive characteristics, is capable of giving the greatest assurances of reliability and safety in use.

Another object of the present invention is to provide a reduction unit that can be easily obtained starting from commonly commercially available elements and materials and is further competitive from a merely economical standpoint.

This aim and these and other objects that will become better apparent hereinafter are achieved by a reduction unit particularly for actuating screw feeders of mixing trucks and auxiliary elements, according to the invention, comprising a parallel shaft gear unit which is associable with the power take-off of a tractor and is operatively connected to a reduction unit body of the reduction unit, said parallel shaft gear unit forming couplings for the connection of auxiliary elements and said reduction unit body being associable with the screw feeders of a mixing truck, characterized in that it comprises a clutch-type disengagement unit between said parallel shaft gear unit and said reduction unit body.

Further characteristics and advantages of the present invention will become better apparent from the description of a preferred but not exclusive embodiment of a reduction unit particularly for actuating screw feeders of mixing trucks and auxiliary elements, illustrated only by way of non-limitative example in the accompanying drawings, wherein:
Figure 1 is a sectional view of the reduction unit according to the invention;
Figure 2 is a schematic enlarged-scale sectional view of the clutch-type disengagement unit;

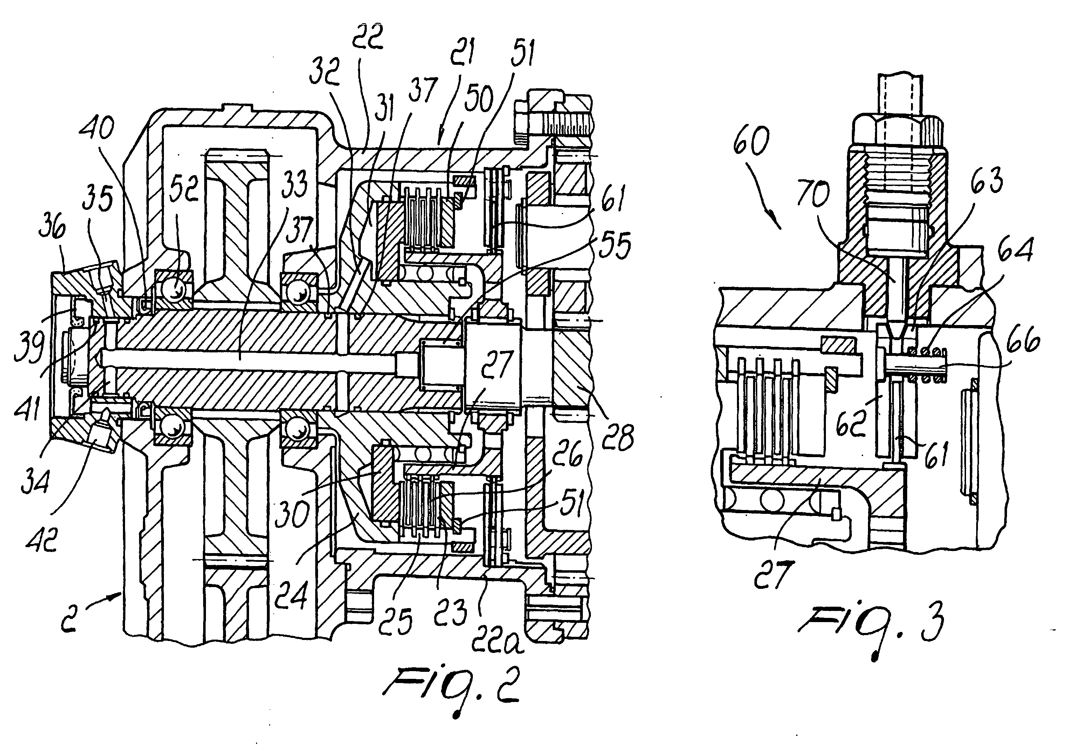

Figure 3 is a schematic view of the braking element.

With reference to the figures, the reduction unit particularly for actuating screw feeders of mixing trucks and auxiliary elements according to the invention, generally designated by the reference numeral 1, comprises a parallel shaft gear unit 2 which has, inside a box-like enclosure 3, an input gear 4 keyed on an input shaft 5 which can be connected to the power take-off of a tractor and the like.

The input gear 4 meshes with a first driven gear 6, which is keyed on a driven shaft 7 rotatably supported by the box-like enclosure of the parallel shaft gear unit.

The input gear 4 meshes with a second driven gear 10, which has internal splined profiles 11 for the connection of auxiliary elements, such as for example the pumps, not shown in the drawing, which are used to actuate the several hydraulic services of the mixing truck.

The driven shaft 7 is operatively associated with a reduction unit body, which is constituted by a two-stage epicyclic reduction unit, generally designated by the reference numeral 20.

The particularity of the invention consists in that between the reduction unit body 20 and the parallel shaft gear unit 2 a clutch-type disengagement unit is interposed, generally designated by the reference numeral 21, which comprises a multiple-disk oil-bath clutch, known per se.

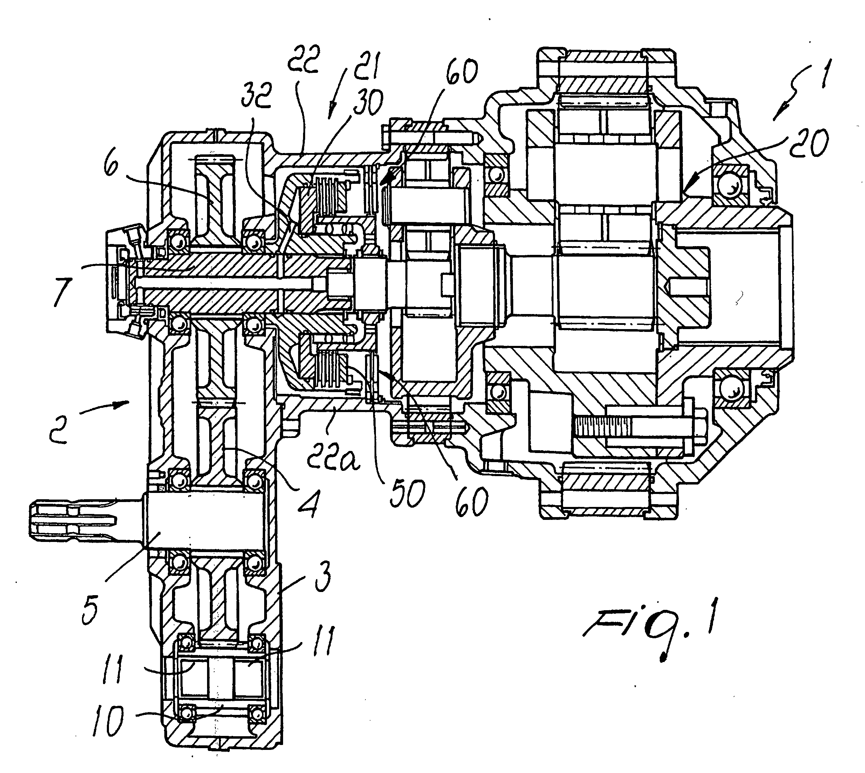

The clutch 21 is accommodated in a casing 22, which can be monolithic with the box-like body 3 of the parallel shaft gear unit, as shown in the upper part of the drawing of Figure 1 or can optionally be constituted by a separate element 22a, as shown schematically in the lower part of the drawing of Figure 1.

The clutch has a plurality of driving disks 23, which are turned by a bell 24 provided with slots for engaging driving tenons 25 defined by the disks 23.

The driven disks 23 turn a hub 27, which rotates rigidly with the shaft of a sun gear 28, which constitutes in practice the input in the epicyclic reduction unit body 20.

For the actuation of the clutch a piston 30 is provided which, in cooperation with the bell 24, delimits a chamber 31, which is connected to branching connectors 32 defined in the bell and connected to an axial duct 33 formed in the driven shaft 7 of the parallel shaft gear unit which ends with radial channels 34 that lead into a manifold 35 defined in a connector 36 located at the end of the driven shaft 7, to which it is possible to connect, for example, measurement instruments and the like.

The actuation oil is conveyed to the connector 36 and, by means of the manifold 35, is sent into the duct 33 and from there to branching connectors 32 to reach the chamber 31 in order to actuate the piston 30.

Two O-rings 37 are provided which avoid the escape of oil inside the reduction unit, and between the manifold 35 and the shaft 7 rotating seals 41 are provided. Any small leaks from said seals are conveyed to a drainage system 42 and returned to the reservoir.

Oil retainers 39 and 40 are also provided which prevent the possible small leaks from spilling respectively toward the casing of the reduction unit or toward the outside.

This system allows to use, for the actuation oil, an external source that is independent of the casing.

It should be noted that the axial load generated on the piston 30 is closed inside the bell by means of a counter plate 50, which is retained in position by a snap ring or equivalent element 51, so that the clutch is axially balanced.

The bell turns in a correctly centered manner, since it is mounted on the driven shaft 7 of the parallel shaft gear unit, which is supported by bearings 52, and the driven hub 27 that is mounted on the shaft of the sun gear 28 likewise rotates correctly, since it is centered on the driven shaft 7 by means of a bearing 55; this solution allows to adapt the sun gear according to the typical criteria of epicyclic reduction units with "floating" sun gear, since the sun gear 28 is sufficiently spaced from the bearing 55.

In order to complete the assembly, a braking device is provided, generally designated by the reference numeral 60, which is designed to keep the screw feeders motionless while the clutch is disengaged.

It is well known that an oil-bath clutch, when open, still transmits a driving torque due to the viscosity of the oil that wets the disks; said torque, for an equal size and number of disks, is directly proportional to the viscosity of the oil and inversely proportional to the play between the disks and the counter plates.

At low oil temperatures, which are matched by high values of viscosity, high values of the driving torque, sufficient for example to turn the screw feeders, might result.

This could occur when starting work, while the mixing truck is empty and therefore the screw feeders need a low torque to be turned, in the morning, in winter months when the oil is cold, with severe risk for safety, since the operator does not expect the screw feeders to turn.

The braking device 60 has a disk 61 mounted on the hub 27 and a pair of counter plates 62 whose rotation is prevented because they are associated with the box-like body 22 by means of tenons 63.

The axial play between the disk 61 and the counter plates 62 is conveniently reduced with respect to the play of the clutch, and therefore a braking torque is generated on the hub 27 which contrasts the driving torque, thus avoiding the unintentional movement of the screw feeders.

It should be noted that the contrasting braking torque that is generated might persist during normal operating conditions, with a possible loss of efficiency.

This dissipation gradually decreases as the temperature of the oil rises, but it might be undesirable.

In order to minimize this dissipation, it is possible to provide relative presser means between the counter plates 62 constituted by elastic pusher means 64 which act between a counter plate and the end of a pin 66 that passes through the counter plates 62 and connects to the other counter plate so as to apply an elastic clamping action.

Spacing pins 70 are also provided which can be connected directly on the hydraulic circuit for supplying the pressurized oil to the clutch, so that the same pressure that is sent to engage the clutch automatically causes the insertion of the spacing pins and accordingly the disengagement of the braking element.

It should also be noted that it is possible to provide for a mutual arrangement of the disks 61 and of the counter plates 62 by means of which the normal heating of the oil, with consequent viscosity reduction, can cause the resulting dissipation to be reduced sufficiently, so that it may not be strictly necessary to provide spacing elements in order to move the counter plates away from the disk of the braking element.

It is thus evident from what has been described above that the invention achieves the intended aim and objects, and in particular the fact is stressed that while maintaining the classical structure of the reduction unit it is possible to interpose between the parallel shaft gear unit and the epicyclic reduction unit a clutch which allows to disengage the coupling of the screw feeders, maintaining the actuation of the auxiliary elements that are connected to the output gear and of all the measurement devices or other auxiliary elements that are connected in a manner known per se at the connector 36 to the output of the driven shaft 7.

The invention thus conceived is susceptible of numerous modifications and variations, all of which are within the scope of the appended claims.

## Claims

1. A reduction unit (1) particularly for actuating screw feeders of mixing trucks and auxiliary elements, comprising a parallel shaft gear unit (2) which is associable with the power take-off of a tractor and is operatively connected to a reduction unit body (20) of the reduction unit, said parallel shaft gear unit (2) forming couplings (10,11) for the connection of auxiliary elements and said reduction unit body (20) being associable with the screw feeders of a mixing truck, **characterized in that** it comprises a clutch-type disengagement unit (21) between said parallel shaft gear unit (2) and said reduction unit body (20).

2. The reduction unit (1) according to claim 1, **characterized in that** it comprises on said parallel shaft gear unit (2), upstream of said clutch-type disengagement unit (21) in the motion input direction, a second driven gear (10) with inner splined profiles (11) for the connection of auxiliary elements.

3. The reduction unit (1) according to the preceding claims, **characterized in that** said reduction unit body is constituted by a two-stage epicyclic reduction unit (20).

4. The reduction unit (1) according to one or more of the preceding claims, **characterized in that** it comprises a casing (22) for accommodating said clutch-type disengagement unit (21), which is formed monolithically with a box-like enclosure (3) of said parallel shaft gear unit (2).

5. The reduction unit (1) according to claim 4, **characterized in that** it comprises, in order to accommodate said clutch-type disengagement unit (21), a separate element (22a) that can be interposed between the box-like enclosure (3) of said parallel shaft gear unit (2) and said reduction unit body (20).

6. The reduction unit (1) according to claim 3, **characterized in that** said clutch-type disengagement unit (21) comprises a bell (24) which rotates rigidly with the driven shaft (7) of said parallel shaft gear unit (2) and has slots for the sliding accommodation of driving tenons (25) defined on driving disks interposed between driven disks (23) that rotate rigidly with a hub (27) which is keyed on the shaft of the sun gear (28) of said epicyclic reduction unit (20).

7. The reduction unit (1) according to claim 6, **characterized in that** it comprises . means for actuating said clutch-type disengagement unit (21) which have a piston (30) that defines, in cooperation with said bell (24), a chamber (31) which is connected to a source of pressurized oil.

8. The reduction unit (1) according to claim 7, **characterized in that** it comprises branching connectors (32) which are connected to said bell (24) and protrude from an axial duct (33) formed in said driven shaft (7) of said parallel shaft gear unit (2), said axial duct (33) ending with radial channels (34) that lead into a manifold (35) formed by a connector (36) located at the end of said driven shaft (7), said manifold (35) being connected to a source of pressurized fluid.

9. The reduction unit (1) according to claim 8, **characterized in that** it comprises two O-rings (37) which are associated with said driven shaft (7), at the region where said branching connectors (32) are connected, and two rotating seals (41), which are formed at the region where said manifold (35) is connected.

10. The reduction unit (1) according to claim 9, **characterized in that** it comprises, on the sides of said rotating seals (41), oil retainers (39,40) which delimit a drainage region which is external to said rotating seals (41).

11. The reduction unit (1) according to one or more of the preceding claims 6-10, **characterized in that** it comprises, inside said bell (24), a counter plate (50) retained in position by a locking ring (51) which is adapted to balance axially said clutch-type disengagement unit (21).

12. The reduction unit (1) according to one or more of the preceding claims 6-11, **characterized in that** it comprises a braking device (60) which acts on said shaft of the sun gear (28) in order to prevent the actuation of said screw feeders when said clutch-type disengagement unit (2) is in the disengaged position.

13. The reduction unit (1) according to claim 12, **characterized in that** it comprises a disk (61) which is mounted on said hub (27) and is arranged between a pair of counter plates (62) provided with tenons that can engage the inner surface of the box-like enclosure (3) of the clutch-type disengagement unit (2).

14. The reduction unit (1) according to claim 13, **characterized in that** said disk (61) and said counter plates (62) are arranged at a mutual distance, and have a facing surface, that is adapted to eliminate the braking action when the oil warms up.

15. The reduction unit (1) according to claim 14, **characterized in that** it comprises means (64) for clamping by pressure said counter plates (62) against said disk (61), said means being deactivatable by at least one spacing pin (70) which is actuated by the same hydraulic circuit for the insertion of said clutch-type disengagement unit (21).

16. The reduction unit (1) according to claim 15, **characterized in that** said means for the mutual clamping of said counter plates (62) on said disk (61) are constituted by elastic pusher means (64) which act between one of said counter plates (62) and the wider end of a pin (66) which is connected to the other one of said counter plates (62) and passes through said counter plates (62).

## Patentansprüche

1. Untersetzungsgetriebe (1), insbesondere zur Betätigung von Schneckenförderern von Mischlastwagen und Hilfseinrichtungen, mit einem Parallelgetriebe (2), das mit dem Abtrieb einer Zugmaschine verbunden werden kann, und einsatzbereit mit dem Untersetzungsgetriebe-Gehäuse (20) des Untersetzungsgetriebes verbunden ist, wobei das Parallelgetriebe (2) Verbindungen (10, 11) für den Anschluss von Hilfseinrichtungen bildet, und das Untersetzungsgetriebe-Gehäuse (20) mit den Schneckenförderern eines Mischlastwagens verbunden werden kann, **dadurch gekennzeichnet, dass** es eine kupplungsartige Auskupplung (21) zwischen dem Parallelgetriebe (2) und dem Untersetzungsgetriebe-Gehäuse (20) besitzt.

2. Untersetzungsgetriebe (1) nach Anspruch 1, **dadurch gekennzeichnet, dass** es an dem Parallelgetriebe (2) vor der kupplungsartigen Auskupplung (21) in Bewegungseingangsrichtung ein zweites Antriebsrad (10) mit Keilprofilen (11) für den Anschluss von Hilfseinrichtungen besitzt.

3. Untersetzungsgetriebe (1) nach den vorhergehenden Ansprüchen, **dadurch gekennzeichnet, dass** das Untersetzungsgetriebe-Gehäuse aus einem zweistufigen, epizyklischen Untersetzungsgetriebe (20) besteht.

4. Untersetzungsgetriebe (1) nach einem oder mehreren der vorhergehenden Ansprüche, **dadurch gekennzeichnet, dass** es ein Gehäuse (22) für die Unterbringung der kupplungsartigen Auskupplung (21) besitzt, das mit einer kastenartigen Einfassung (3) des Parallelgetriebes (2) monolithisch ausgebildet ist.

5. Untersetzungsgetriebe (1) nach Anspruch 4, **dadurch gekennzeichnet, dass** es für die Unterbringung der kupplungsartigen Auskupplung (21) ein separates Element (22a) besitzt, das zwischen die kastenförmige Einfassung (3) des Parallelgetriebes (2) und das Untersetzungsgetriebe-Gehäuse (20) eingeschoben werden kann.

6. Untersetzungsgetriebe (1) nach Anspruch 3, **dadurch gekennzeichnet, dass** die kupplungsartige Auskupplung (21) eine Muffe (24) besitzt, die sich fest mit der Antriebswelle (7) des Parallelgetriebes (2) dreht, und Schlitze für die gleitende Aufnahme von Antriebszapfen (25) besitzt, die sich an Treibscheiben befinden, welche zwischen den angetriebenen Scheiben (23) eingeschoben wurden, die sich fest mit einer Nabe (27) drehen, welche wiederum an der Welle des Laufkranzes (28) des epizyklischen Untersetzungsgetriebes (20) verkeilt sind.

7. Untersetzungsgetriebe (1) nach Anspruch 6, **dadurch gekennzeichnet, dass** es Elemente für die Betätigung der kupplungsartigen Auskupplung (21) besitzt, welche einen Kolben (30) besitzen, der zusammen mit der Muffe (24) eine Kammer (31) bildet, welche mit einer Druckölquelle verbunden ist.

8. Untersetzungsgetriebe (1) nach Anspruch 7, **dadurch gekennzeichnet, dass** es sich verzweigende Stecker (32) besitzt, die mit der Muffe (24) verbunden sind, und aus einem axialen Kanal (33) herausragen, der in der Antriebswelle (7) des Parallelgetriebes (2) gebildet wird, wobei der axiale Kanal (33) in radialen Kanälen (34) endet, welche in einen Verteiler (35) führen, der durch einen Stecker (36) gebildet wird, welcher sich am Ende der Antriebswelle (7) befindet, wobei der Verteiler (35) mit einer Druckflüssigkeitsquelle verbunden ist.

9. Untersetzungsgetriebe (1) nach Anspruch 8, **dadurch gekennzeichnet, dass** es zwei O-Ringe (37) besitzt, die mit der Antriebswelle (7) in dem Bereich verbunden sind, in dem die Stecker (32) angeschlossen sind, sowie zwei drehbare Dichtungen (41), welche in dem Bereich gebildet werden, in dem der Verteiler (35) angeschlossen ist.

10. Untersetzungsgetriebe (1) nach Anspruch 9, **dadurch gekennzeichnet, dass** es an den Seiten der drehbaren Dichtungen (41) Ölrückhaltevorrichtungen (39, 40) besitzt, welche einen Ablaufbereich begrenzen, der sich außerhalb der drehbaren Dichtungen (41) befindet.

11. Untersetzungsgetriebe (1) nach einem oder mehreren der vorhergehenden Ansprüche 6 bis 10, **dadurch gekennzeichnet, dass** es in der Muffe (24) eine Gegenplatte (50) besitzt, die durch einen Haltering (51) gesichert wird, welcher die kupplungsartige Auskupplung (21) ausgleicht.

12. Untersetzungsgetriebe (1) nach einem oder mehreren der vorhergehenden Ansprüche 6 bis 11, **dadurch gekennzeichnet, dass** es eine Bremsvorrichtung (60) besitzt, welche auf die Welle des Laufkranzes (28) wirkt, um die Betätigung der Schneckenförderer zu verhindern, wenn sich die kupplungsartige Auskupplung (2) in der ausgekuppelten Position befindet.

13. Untersetzungsgetriebe (1) nach Anspruch 12, **dadurch gekennzeichnet, dass** es eine Scheibe (61) besitzt, die an der Nabe (27) montiert und zwischen einem Paar Gegenplatten (62) angeordnet sind, welche mit Zapfen versehen sind, die in die Innenfläche der kastenartigen Einfassung (3) der kupplungsartigen Auskupplung (2) eingreifen können.

14. Untersetzungsgetriebe (1) nach Anspruch 13, **dadurch gekennzeichnet, dass** die Scheibe (61) und die Gegenplatte (62) in einem Abstand zueinander angeordnet sind, wobei mit einer zugewandten Fläche der Bremsvorgang gestoppt wird, wenn sich das Öl erwärmt.

15. Untersetzungsgetriebe (1) nach Anspruch 14, **dadurch gekennzeichnet, dass** es Elemente (64) besitzt, mittels derer die Gegenplatten (62) durch Druck an die Scheibe (61) geklemmt werden, wobei die Elemente durch mindestens einen Distanzstift (70), der durch den gleichen Hydraulikkreis wie für den Einschub der kupplungsartigen Auskupplung (21) betätigt wird, deaktiviert werden können.

16. Untersetzungsgetriebe (1) nach Anspruch 15, **dadurch gekennzeichnet, dass** die Elemente für das gegenseitige Festklemmen der Gegenplatten (62) an der Scheibe (61) aus elastischen Stoßelementen (64) bestehen, welche zwischen einer der Gegenplatten (62) und dem breiteren Ende eines Stiftes (66) wirken, der mit dem anderen Ende der Gegenplatte (62) verbunden ist, und durch die Gegenplatte (62) führt.

## Revendications

1. Unité de réduction (1) particulièrement pour actionner des transporteurs à vis de chariots mélangeurs et d'éléments auxiliaires, comprenant une unité d'engrenage (2) à arbres parallèles qui peut être associée à la prise de force d'un tracteur et est reliée de façon opérationnelle avec un corps d'unité de réduction (20) de l'unité de réduction, ladite unité d'engrenage (2) à arbres parallèles formant des couplages (10, 11) pour la connexion d'éléments auxiliaires et ledit corps d'unité de réduction (20) pouvant être associé aux transporteurs à vis d'un chariot mélangeur, **caractérisée en ce qu'**elle comprend une unité de désengagement (21) du type à embrayage entre ladite unité d'engrenage (2) à arbres parallèles et ledit corps d'unité de réduction (20).

2. Unité de réduction (1) selon la revendication 1, **caractérisée en ce qu'**elle comprend sur l'unité d'engrenage (2) à arbres parallèles, en amont de ladite unité de désengagement (21) du type à embrayage, dans la direction d'entrée du mouvement, un deuxième engrenage mené (10) avec profils intérieurs cannelés (11) pour la connexion d'éléments auxiliaires.

3. Unité de réduction (1) selon les revendications précédentes, **caractérisée en ce que** ledit corps d'unité de réduction est constitué par une unité de réduction épicycloïdale à deux étages (20).

4. Unité de réduction (1) selon une ou plusieurs des revendications précédentes, **caractérisée en ce qu'**elle comprend un carter (22) pour loger ladite unité de désengagement (21) du type à embrayage, qui est formé en une pièce avec une fermeture du type boîtier (3) de ladite unité d'engrenage (2) à arbres parallèles.

5. Unité de réduction (1) selon la revendication 4, **caractérisée en ce qu'**elle comprend, afin de loger ladite unité de désengagement (21) du type à embrayage, un élément séparé (22a) qui peut être interposé entre la fermeture du type boîtier (3) de ladite unité d'engrenage (2) à arbres parallèles et ledit corps d'unité de réduction (20).

6. Unité de réduction (1) selon la revendication 3, **caractérisée en ce que** ladite unité de désengagement (21) du type à embrayage comprend une cloche (24) qui effectue une rotation solidairement avec l'arbre mené (7) de ladite unité d'engrenage (2) à arbres parallèles et comporte des fentes pour loger de façon coulissante des tenons d'entraînement (25) définis sur des disques d'entraînement interposés entre des disques menés (23) qui effectuent une rotation solidairement avec un moyeu (27) qui est claveté sur l'arbre de l'engrenage planétaire (28) de ladite unité de réduction épicycloïdale (20).

7. Unité de réduction (1) selon la revendication 6, **caractérisée en ce qu'**elle comprend des moyens pour actionner ladite unité de désengagement (21) du type à embrayage, qui possèdent un piston (30) qui définit, en coopération avec ladite cloche (24), une chambre (31) qui est reliée à une source d'huile sous pression.

8. Unité de réduction (1) selon la revendication 7, **caractérisée en ce qu'**elle comprend des connecteurs de branchement (32) qui sont reliés à ladite cloche (24) et font saillie à partir d'une gaine axiale (33) formée dans ledit arbre mené (7) de ladite unité d'engrenage (2) à arbres parallèles, ladite gaine axiale (33) se terminant par des canaux radiaux (34) qui conduisent dans un distributeur (35) formé par un connecteur (36) situé à l'extrémité dudit arbre mené (7), ledit distributeur (35) étant relié à une source de fluide sous pression.

9. Unité de réduction (1) selon la revendication 8, **caractérisée en ce qu'**elle comprend deux joints toriques (37) qui sont associés audit arbre mené (7), au niveau de la région où lesdits connecteurs de branchement (32) sont reliés, et deux joints rotatifs (41) qui sont formés au niveau de la région où ledit distributeur (35) est connecté.

10. Unité de réduction (1) selon la revendication 9, **caractérisée en ce qu'**elle comprend, sur les faces latérales desdits joints rotatifs (41), des déflecteurs d'huile (39, 40) qui délimitent une région de drainage qui est extérieure auxdits joints rotatifs (41).

11. Unité de réduction (1) selon une ou plusieurs des revendications précédentes 6-10, **caractérisée en ce qu'**elle comprend, à l'intérieur de ladite cloche (24), une contre-plaque (50) retenue en position par une bague de serrage (51) qui est adaptée de façon à équilibrer axialement ladite unité de désengagement (21) du type à embrayage.

12. Unité de réduction (1) selon une ou plusieurs des revendications précédentes 6-11, **caractérisée en ce qu'**elle comprend un dispositif de freinage (60) qui agit sur ledit arbre de l'engrenage planétaire (28) afin d'empêcher l'actionnement desdits transporteurs à vis lorsque ladite unité de désengagement (2) du type à embrayage est à la position désengagée.

13. Unité de réduction (1) selon la revendication 12, **caractérisée en ce qu'**elle comprend un disque (61) qui est monté sur ledit moyeu (27) et qui est disposé entre une paire de contre-plaques (62) munies de tenons qui peuvent s'engager dans la surface intérieure de la fermeture du type boîtier (3) de l'unité de désengagement (2) du type à embrayage.

14. Unité de réduction (1) selon la revendication 13, **caractérisée en ce** ledit disque (61) et lesdites contre-plaques (62) sont disposés à une distance réciproque et possèdent une surface en vis-à-vis qui est adaptée pour supprimer l'action de freinage lorsque l'huile s'échauffe.

15. Unité de réduction (1) selon la revendication 14, **caractérisée en ce qu'**elle comprend des moyens (64) pour serrer par pression lesdites contre-plaques (62) contre ledit disque (61), lesdits moyens pouvant être désactivés par au moins une broche d'espacement (70) qui est actionnée par le même circuit hydraulique que pour l'insertion de ladite unité de désengagement (21) du type à embrayage.

16. Unité de réduction (1) selon la revendication 15, **caractérisée en ce que** lesdits moyens pour le serrage réciproque desdites contre-plaques (62) contre ledit disque (61) sont constitués par des moyens de poussoirs élastiques (64) qui agissent entre l'une desdites contre-plaques (62) et l'extrémité plus large d'une broche (66) qui est reliée à l'autre desdites contre-plaques (62) et passe à travers lesdites contre-plaques (62).
